(19) Europäisches Patentamt
European Patent Office
Office européen des brevets

(11) **EP 4 265 570 A1**

(12) **EUROPEAN PATENT APPLICATION**
published in accordance with Art. 153(4) EPC

(43) Date of publication:
**25.10.2023 Bulletin 2023/43**

(21) Application number: **21906345.0**

(22) Date of filing: **01.12.2021**

(51) International Patent Classification (IPC):
$C01G\ 53/00$ (2006.01)   $H01M\ 4/36$ (2006.01)
$H01M\ 4/505$ (2010.01)   $H01M\ 4/525$ (2010.01)

(52) Cooperative Patent Classification (CPC):
C01G 53/00; H01M 4/36; H01M 4/505;
H01M 4/525; Y02E 60/10

(86) International application number:
**PCT/JP2021/044094**

(87) International publication number:
**WO 2022/130982 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2020 JP 2020209893**

(71) Applicant: **Panasonic Intellectual Property
Management Co., Ltd.
Osaka-shi, Osaka 540-6207 (JP)**

(72) Inventors:
• **TOGO, Masakazu**
  **Kadoma-shi, Osaka 571-0057 (JP)**
• **AOKI, Yoshinori**
  **Kadoma-shi, Osaka 571-0057 (JP)**
• **OGASAWARA, Takeshi**
  **Kadoma-shi, Osaka 571-0057 (JP)**

(74) Representative: **Novagraaf International SA
Chemin de l'Echo 3
1213 Onex, Geneva (CH)**

(54) **NON-AQUEOUS ELECTROLYTE SECONDARY BATTERY POSITIVE ELECTRODE AND NON-AQUEOUS ELECTROLYTE SECONDARY BATTERY**

(57)    A positive electrode active material included in this non-aqueous electrolyte secondary battery positive electrode includes a lithium-transition metal composite oxide. The lithium-transition metal composite oxide contains 80-95 mol% of Ni and 0-20 mol% of Mn, and 3-8 mol% of a metal element other than Li is present in a Li layer of the lithium-transition metal composite oxide. The ratio m/n of the half width m of the diffraction peak for the (003) plane to the half width n of the diffraction peak for the (110) plane in an x-ray diffraction pattern obtained by x-ray diffraction of the positive electrode active material satisfies $0.72 \leq m/n \leq 0.85$. The lithium-transition metal composite oxide is formed from secondary particles that are aggregates of primary particles, the internal porosity of the secondary particles being 1%-5%.

Figure 1

**Description**

TECHNICAL FIELD

The present disclosure generally relates to a positive electrode for a non-aqueous electrolyte secondary battery, and a non-aqueous electrolyte secondary battery.

BACKGROUND ART

In recent years, a lithium-transition metal composite oxide containing Ni has attracted attention as a positive electrode active material with a high energy density. For example, Patent Literature 1 discloses a positive electrode active material comprising a lithium-transition metal composite oxide represented by the general formula $Li_xNi_{1-y}M_yO_2$, wherein $0.9 \leq x \leq 1.2$, $0 < y \leq 0.7$, M represents one or more elements selected from Mn, Co, and the like, and $\alpha > 0.20$, wherein in a powder X-ray diffraction (XRD), a half-value width of a diffraction peak of a (003) plane is less than or equal to 0.14°, and a diffraction peak ratio between a (104) plane and the (003) plane [(014)/(003)] is less than or equal to 0.80.

Patent Literature 2 discloses a positive electrode active material that includes a LiNiMn composite oxide having a layered hexagonal crystal system and containing Mg, wherein lattice constants a and c as determined by X-ray diffraction are 2.8640 Å $\leq$ a $\leq$ 2.8750 Å and 14.195 Å $\leq$ c $\leq$ 14.225 Å.

CITATION LIST

PATENT LITERATURE

PATENT LITERATURE 1: International Publication No. 2013/084536
PATENT LITERATURE 2: International Publication No. 2020/027158

SUMMARY

TECHNICAL PROBLEM

In a lithium-transition metal composite oxide included in a positive electrode active material, when a Ni proportion is greater than or equal to 80 mol% relative to a total number of moles of metal elements excluding Li, a large amount of Li is abstracted during charge, and thus repeated charge and discharge causes collapse of a layered crystal structure and resultantly decreased capacity, which is problematic. The art disclosed in Patent Literature 1 does not consider the lithium-transition metal composite oxide with a high Ni content rate, and still has room for improvement of charge-discharge cycle characteristics.

It is an advantage of the present disclosure to provide a positive electrode for a non-aqueous electrolyte secondary battery including a lithium-transition metal composite oxide with a high Ni content rate, the positive electrode contributing to improvement of the charge-discharge cycle characteristics of the battery.

SOLUTION TO PROBLEM

A positive electrode for a non-aqueous electrolyte secondary battery of an aspect of the present disclosure is a positive electrode for a non-aqueous electrolyte secondary battery including a positive electrode active material, wherein the positive electrode active material includes a lithium-transition metal composite oxide having a layered structure and containing at least Ni and Mn, a proportion of Ni relative to a total amount of metal elements excluding Li in the lithium-transition metal composite oxide is within a range of 80 mol% $\leq$ Ni $\leq$ 95 mol%, a proportion of Mn relative to the total amount of metal elements excluding Li in the lithium-transition metal composite oxide is within a range of 0 mol% < Mn $\leq$ 20 mol%, the layered structure includes a Li layer reversibly intercalating and deintercalating Li, and a proportion of metal elements excluding Li and present in the Li layer is greater than or equal to 3 mol% and less than or equal to 8 mol% relative to a total number of moles of metal elements excluding Li in the lithium-transition metal composite oxide, a ratio m/n of a half-value width m of a diffraction peak of a (003) plane to a half-value width n of a diffraction peak of a (110) plane in an X-ray diffraction pattern by X-ray diffraction is $0.72 \leq m/n \leq 0.85$, and the lithium-transition metal composite oxide in the positive electrode for a non-aqueous electrolyte secondary battery is composed of secondary particles each formed by aggregation of primary particles, and a porosity inside the secondary particle is greater than or equal to 1% and less than or equal to 5%.

A non-aqueous electrolyte secondary battery of an aspect of the present disclosure comprises: the above positive electrode for a non-aqueous electrolyte secondary battery; a negative electrode; and a non-aqueous electrolyte.

ADVANTAGEOUS EFFECT OF INVENTION

According to the positive electrode for a non-aqueous electrolyte secondary battery of an aspect of the present disclosure, a high-capacity non-aqueous electrolyte secondary battery that inhibits decrease in a battery capacity with charge and discharge can be provided.

BRIEF DESCRIPTION OF DRAWING

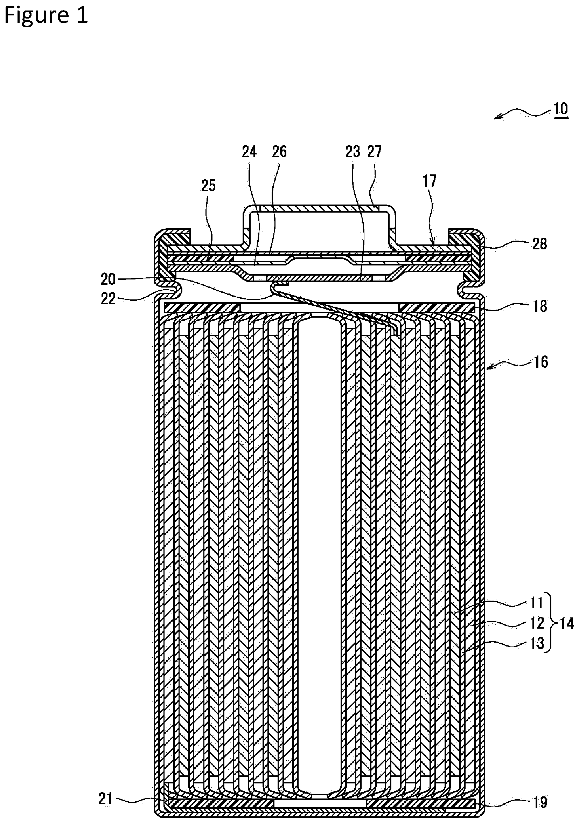

FIG. 1 is a sectional view of a non-aqueous electrolyte secondary battery of an example of an embodiment.

DESCRIPTION OF EMBODIMENTS

A layered structure of a lithium-transition metal composite oxide included in the positive electrode includes: a transition metal layer containing Ni and the like; a Li layer; and an oxygen layer. By the Li layer reversibly intercalating and deintercalating Li ions present therein, charge-discharge reactions of a battery proceed. When a lithium-transition metal composite oxide with a high Ni content rate having a Ni proportion of greater than or equal to 80 mol% relative to a total number of moles of metal elements excluding Li is used, a large amount of Li ions is abstracted from the Li layer during charge of the battery, and thereby the layered structure is collapsed, resulting in decreased battery capacity. In addition, the lithium-transition metal composite oxide with a high Ni content rate has high activity near particle surfaces, and a reaction with an electrolyte liquid and the like easily causes generation and erosion of a surface-deteriorated layer, leading to decreased battery capacity.

Accordingly, the present inventors have made intensive investigation to solve the above problem, and consequently have found that the structure of the lithium-transition metal composite oxide may be stabilized by: containing a predetermined amount of Mn, of which oxidation number does not change during charge and discharge, in the transition metal layer of the lithium-transition metal composite oxide included in the positive electrode; containing a predetermined amount of metal elements excluding Li in the Li layer; and setting a layered structure to have appropriate distortion in a plane direction such that a ratio of a half-value width m" of a (003) plane / a half-value width n of a (110) plane in an X-ray diffraction pattern. The present inventors have further found that setting a porosity of the lithium-transition metal composite oxide in the positive electrode to be within a predetermined range inhibits the reaction with the electrolyte liquid and inhibits the generation and erosion of the surface-deteriorated layer to improve the cycle characteristics. It is considered that a specific synergistic effect between the aforementioned structure stabilization of the lithium-transition metal composite oxide and the aforementioned inhibition of the generation and erosion of the surface-deteriorated layer by regulating the porosity of the lithium-transition metal composite oxide in the positive electrode improves the cycle characteristics.

The description " a numerical value (A) to a numerical value (B)" herein means greater than or equal to the numerical value (A) and less than or equal to the numerical value (B).

Hereinafter, an example of an embodiment of the non-aqueous electrolyte secondary battery using the positive electrode for a non-aqueous electrolyte secondary battery according to the present disclosure will be described in detail. Hereinafter, a cylindrical battery in which a wound electrode assembly 14 is housed in a bottomed cylindrical exterior housing can 16 will be exemplified, but the exterior is not limited to a cylindrical exterior housing can, and may be, for example, a rectangular exterior housing can, or an exterior composed of laminated sheets including a metal layer and a resin layer. The electrode assembly may be a stacked electrode assembly in which a plurality of positive electrodes and a plurality of negative electrodes are alternately stacked with a separator interposed therebetween.

FIG. 1 is a sectional view of a non-aqueous electrolyte secondary battery 10 of an example of an embodiment. As exemplified in FIG. 1, the non-aqueous electrolyte secondary battery 10 comprises a wound electrode assembly 14, a non-aqueous electrolyte, and an exterior housing can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially substituted with a halogen atom such as fluorine. For the electrolyte salt, a lithium salt such as $LiPF_6$ is used, for example. The electrolyte is not limited to a liquid electrolyte, and may be a solid electrolyte using a gel polymer and the like.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The two separators 13 are formed to be one size larger than at least the positive electrode 11, and disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, thereby sealability inside the battery is ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, the separator 13, and the non-aqueous electrolyte, which constitute the non-aqueous electrolyte secondary battery 10, specifically the positive electrode 11, will be described in detail.

[Positive Electrode]

The positive electrode 11 has a positive electrode current collector and positive electrode mixture layers formed on both surfaces of the positive electrode current collector. For the positive electrode current collector, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder. The positive electrode 11 may be produced by applying a positive electrode slurry including the positive electrode active material, the conductive agent, the binder, and the like on the surfaces of the positive electrode current collector (applying step), drying the coating (drying step), and rolling the coating to form the positive electrode mixture layers on both the surfaces of the positive electrode current collector (rolling step).

Examples of the conductive agent included in the positive electrode mixture layer include carbon materials such as carbon black, acetylene black, Ketjenblack, carbon nanotube (CNT), graphene, and graphite. Examples of the binder included in the positive electrode mixture layer include a fluororesin such as polytetrafluoroethylene (PTFE) and polyvinylidene fluoride (PVdF), polyacrylonitrile (PAN), a polyimide, an acrylic resin, and a polyolefin. With these resins, carboxymethylcellulose (CMC) or a salt thereof, polyethylene oxide (PEO), and the like may be used in combination.

The positive electrode active material included in the positive electrode mixture layer has a layered structure, and includes a lithium-transition metal composite oxide containing at least Ni and Mn.

Examples of the layered structure of the lithium-transition metal composite oxide include a layered structure belonging to the space group R-3m and a layered structure belonging to the space group C2/m. Among them, a layered structure belonging to the space group R-3m is preferable in terms of increasing the capacity, stability of the crystal structure, and the like. The layered structure of the lithium-transition metal composite oxide includes a transition metal layer, a Li layer, and an oxygen layer. The Li layer is a layer that reversibly intercalates and deintercalates Li.

A proportion of Ni relative to a total amount of metal elements excluding Li in the lithium-transition metal composite oxide is within a range of 80 mol% $\leq$ Ni $\leq$ 95 mol%, preferably greater than or equal to 83 mol%, and more preferably greater than or equal to 85 mol%.

A proportion of Mn relative to the total amount of metal elements excluding Li in the lithium-transition metal composite oxide is within a range of 0 mol% < Mn $\leq$ 20 mol%, preferably within a range of 2 mol% $\leq$ Mn $\leq$ 17 mol%, and more preferably 5 mol% $\leq$ Mn $\leq$ 15 mol%. Since the oxidation number of Mn does not change during charge and discharge, it is considered that containing Mn in the transition metal layer stabilizes the structure of the transition metal layer. Mn may be uniformly dispersed in the layered structure of the lithium-transition metal composite oxide, may be present in a part of the layered structure, or may be distributed in a state of a concentration gradient in the layered structure, for example.

The lithium-transition metal composite oxide may further contain M (M represents at least one element selected from the group consisting of B, Al, Ca, Co, Fe, Ti, Si, Sr, Nb, Mo, W, Zr, and Zn). A proportion of M relative to the total amount of metal elements excluding Li in the lithium-transition metal composite oxide is preferably within a range of 0 mol% $\leq$ M $\leq$ 7 mol%, more preferably 0.01 mol% $\leq$ M $\leq$ 5 mol%, and particularly preferably 0.05 mol% $\leq$ M $\leq$ 3 mol%. The lithium-transition metal composite oxide containing M improves the charge-discharge battery capacity and initial efficiency of the battery.

A proportion of Co relative to the total amount of metal elements excluding Li in the lithium-transition metal composite oxide is preferably within a range of 0 mol% $\leq$ Co $\leq$ 5 mol%, more preferably within a range of 0 mol% $\leq$ Co $\leq$ 3 mol%, particularly preferably 0 mol% $\leq$ Co $\leq$ 0.1 mol%, the lithium-transition metal composite oxide containing substantially no Co. The description "contain substantially no Co" means a case where Co is absolutely not contained and a case where Co is mixed as an impurity (a case where an amount of Co that may not be precisely quantified is mixed).

The lithium-transition metal composite oxide may be represented by the general formula $Li_xNi_yMn_zM_\alpha O_{2-\beta}$, wherein $0.95 \leq x \leq 1.05$, $0.80 \leq y \leq 0.95$, $0 < z \leq 0.2$, $0 \leq \alpha \leq 0.07$, $0 \leq \beta \leq 0.05$, $y+z+\alpha = 1$, and M represents at least one element selected from the group consisting of B, Al, Ca, Co, Fe, Ti, Si, Sr, Nb, Mo, W, Zr, and Zn.

The positive electrode active material may include a lithium-transition metal composite oxide other than that represented by the above general formula or another compound within a range not impairing an object of the present disclosure. The mole fractions of the metal elements contained in the lithium-transition metal composite oxide may be measured by an inductively coupled plasma atomic emission spectrometer (ICP-AES), an electron probe micro analyzer (EPMA), an energy dispersive X-ray analyzer (EDX), and the like.

The lithium-transition metal composite oxide is of particles having a median diameter (D50) on a volumetric basis of, for example, greater than or equal to 3 $\mu$m and less than or equal to 30 $\mu$m, preferably greater than or equal to 5 $\mu$m and less than or equal to 25 $\mu$m, and particularly preferably greater than or equal to 7 $\mu$m and less than or equal to 15 $\mu$m. The D50 means a particle diameter at which a cumulative frequency is 50% from a smaller particle diameter side in a particle size distribution on a volumetric basis. The particle size distribution of the lithium-transition metal composite oxide may be measured by using a laser diffraction-type particle size distribution measuring device (for example, MT3000II, manufactured by MicrotracBEL Corp.) with water as a dispersion medium.

The lithium-transition metal composite oxide is of, for example, secondary particles each formed by aggregation of a plurality of primary particles. A particle diameter of the primary particles constituting the secondary particles is, for example, greater than or equal to 0.05 $\mu$m and less than or equal to 1 $\mu$m. The particle diameter of the primary particle is measured as a diameter of a circumscribed circle in a particle image observed with a scanning electron microscope (SEM).

The lithium-transition metal composite oxide may have a surface-modified layer on surfaces of the secondary particles or on an interface on which the primary particles contact with each other. The surface-modified layer may contain at least one element selected from the group consisting of Co, Ca, Sr, W, B, Nb, Mo, Al, and Zr (hereinafter, referred to as the surface-modifying element), and particularly preferably contains at least any one element of the group consisting of Ca, Sr, B, and W. Since inhibiting a side reaction between the lithium-transition metal composite oxide and the electrolyte liquid, the surface-modified layer may inhibit the deterioration of the battery.

A content of the surface-modifying element in the surface-modified layer may be, for example, greater than or equal to 0.05 mol% and less than or equal to 0.50 mol% relative to the lithium-transition metal composite oxide. Within this range, a surface state of the lithium-transition metal composite oxide may be stabilized by electronic interaction. The presence of the surface-modifying element in the surface-modified layer may be confirmed by energy dispersive X-ray spectroscopy (TEM-EDX). The content of the surface-modifying element in the surface-modified layer may be measured by analyzing a solution of the lithium-transition metal composite oxide in a mixed solution of aqua regia and hydrofluoric acid with inductively coupled plasma (ICP) atomic emission spectroscopy.

A thickness of the surface-modified layer is, for example, greater than or equal to 0.1 nm. This may inhibit the reaction with the electrolyte liquid on the surface of the lithium-transition metal composite oxide. The thickness of the surface-modified layer may be, for example, less than or equal to 5 nm.

In the layered structure of the lithium-transition metal composite oxide, a proportion of the metal elements excluding Li and present in the Li layer is greater than or equal to 3 mol% and less than or equal to 8 mol% relative to the total number of moles of the metal element excluding Li in the lithium-transition metal composite oxide. If the proportion of the metal elements excluding Li in the Li layer is less than 3 mol%, the stability of the layered structure in a state of deintercalating Li ions in the Li layer is deteriorated, resulting in collapse of the structure, leading to decreased battery capacity. If the proportion of the metal elements excluding Li in the Li layer is greater than 8 mol%, diffusability of Li ions in the Li layer is deteriorated, resulting in decreased battery capacity and increased reaction resistance of the battery. The metal element present in the Li layer is mainly Ni, but other metal elements may be contained. The proportion of the metal elements excluding Li and present in the Li layer may be regulated by, for example, an amount of a Li compound to be mixed, a setting temperature, holding time, and heating rate in a multi-step calcination of a mixture of a transition metal oxide and a Li compound in production of the lithium-transition metal composite oxide.

The proportion of the metal elements excluding Li in the Li layer is obtained by Rietveld analysis result of an X-ray diffraction pattern by X-ray diffraction measurement of the lithium-transition metal composite oxide. For the Rietveld analysis of the X-ray diffraction pattern, PDXL2 (manufactured by Rigaku Corporation), which is a software for Rietveld analysis, may be used, for example.

The X-ray diffraction pattern is obtained by a powder X-ray diffraction method using a powder X-ray diffraction apparatus (manufactured by Rigaku Corporation, product name "RINT-TTR", radiation source Cu-K$\alpha$) under the following conditions.

Measuring Range: 15-120°
Scanning Rate: 4°/min
Analyzing Range: 30-120°
Background: B-spline
Profile Function: Split pseudo-Voigt function
Restricting Condition:

$$\mathrm{Li}(3a) + \mathrm{Ni}(3a) = 1$$

$$\mathrm{Ni}(3a) + \mathrm{Ni}(3b) = \alpha \ (\alpha \text{ represents each Ni content proportion})$$

ICSD No.: 98-009-4814

In the lithium-transition metal composite oxide, a ratio m/n of a half-value width m of a diffraction peak of a (003) plane to a half-value width n of a diffraction peak of a (110) plane in the X-ray diffraction pattern by the X-ray diffraction is $0.72 \leq \mathrm{m/n} \leq 0.85$. Within this range, the layered structure can have a state of an appropriate distortion in the plane direction, and thereby a battery with high capacity and improved charge-discharge cycle characteristics can be obtained. If m/n is less than 0.72, the distortion of the layered structure is too large and the layered structure becomes brittle. If m/n is greater than 0.85, the battery capacity is deteriorated.

In the positive electrode 11, the lithium-transition metal composite oxide is composed of secondary particles each formed by aggregation of a plurality of primary particles. In the positive electrode 11, a porosity inside the secondary particle of the lithium-transition metal composite oxide is preferably greater than or equal to 1% and less than or equal to 5%, and more preferably greater than or equal to 1% and less than or equal to 3%. Furthermore, setting the porosity within the above predetermined range inhibits the reaction with the electrolyte liquid and inhibits the generation and erosion of the surface-deteriorated layer to improve the cycle characteristics. In the positive electrode 11, if the porosity inside the secondary particle of the lithium-transition metal composite oxide is less than 1%, the efficiency of the reaction between the positive electrode and the electrolyte liquid probably decreases. If the porosity is greater than 5%, the side reaction is more likely to proceed on the lithium-transition metal composite oxide surface, which is likely to deteriorate the positive electrode. The porosity inside the secondary particle of the lithium-transition metal composite oxide in the positive electrode 11 may be regulated by the rolling step in the positive electrode production, and by a temperature of a heat treatment in a first step and a calcining temperature in a third step of a method for manufacturing the positive electrode active material, described later.

Next, an example of a method for manufacturing the positive electrode active material including the lithium-transition metal composite oxide will be described.

The method for manufacturing the positive electrode active material includes, for example: a first step of obtaining a transition metal oxide including Ni and Mn; a second step of mixing the transition metal oxide and a Li compound to obtain a mixture; and a third step of calcining the mixture to obtain the lithium-transition metal composite oxide.

In the first step, for example, with stirring a solution of metal salts including Ni and Mn, a solution of an alkali such as sodium hydroxide is added dropwise in order to adjust a pH on the alkaline side (for example, greater than or equal to 8.5 and less than or equal to 12.5) to precipitate (coprecipitate) a transition metal hydroxide including Ni and Mn. This transition metal hydroxide is heat-treated to obtain a transition metal oxide including Ni and Mn. The temperature of the heat treatment is, for example, within a range of greater than or equal to 300°C and less than or equal to 600°C. The transition metal oxide may contain metal elements other than Ni and Mn, such as Co.

In the second step, the transition metal oxide obtained in the first step and the Li compound are firstly dry-mixed to obtain the mixture. Examples of the Li compound include $Li_2CO_3$, $LiOH$, $Li_2O_2$, $Li_2O$, $LiNO_3$, $LiNO_2$, $Li_2SO_4$, $LiOH \cdot H_2O$, $LiH$, and $LiF$. A mixing ratio between the transition metal oxide obtained in the first step and the Li compound is preferably regulated within a range such that the mole ratio of the metal elements excluding Li : Li is greater than or equal to 1:0.98 and less than or equal to 1:1.1, for example. When the transition metal oxide and the Li compound are mixed, compounds containing a metal element other than Li, Ni, and Mn may be added. Examples of the compound containing the metal element other than Li, Ni, and Mn include Ca compounds such as $Ca(OH)_2$, Sr compounds such as $Sr(OH)_2$, Al compounds such as $Al(OH)_3$, Nb compounds such as $Nb_2O_5$, and W compounds such as $WO_3$.

In the third step, the mixture obtained in the second step is calcined at less than or equal to 950°C for a predetermined time to obtain the lithium-transition metal composite oxide. Calcination at greater than 950°C causes the porosity of the lithium-transition metal composite oxide in the positive electrode 11 to be out of the predetermined range during the rolling step in the positive electrode production, which may fail to obtain the sufficient effect. The calcination of the mixture in the third step comprises, for example, a multistage calcination step including: a first calcining step of calcining the mixture in a calcination furnace under an oxygen flow to a first set temperature, which is greater than or equal to 450°C and less than or equal to 680°C, at a first heating rate; and a second calcining step of calcining the calcined product obtained in the first calcining step in a calcination furnace under an oxygen flow to a second set temperature, which is greater than 680°C and less than or equal to 850°C, at a second heating rate. The first heating rate is within a range of greater than or equal to 1.5°C/min and less than or equal to 5.5°C/min. The second heating rate, which is less than the first heating rate, is within a range of greater than or equal to 0.1°C/min and less than or equal to 3.5°C/min. A plurality of the first and second heating rates may be set in each temperature range as long as the first heating rate and the second heating rate are within the above determined ranges. A holding time at the first set temperature in the first calcining step is preferably less than or equal to 5 hours, and more preferably less than or equal to 3 hours. The holding time at the first set temperature refers to a time of maintaining the first set temperature after the temperature reaches the first set temperature. A holding time at the second set temperature in the second calcining step is preferably greater than or equal to 1 hour and less than or equal to 10 hours, and more preferably greater than or equal to 1 hour and less than or equal to 5 hours. The holding time at the second set temperature refers to a time of maintaining the second set temperature after the temperature reaches the second set temperature. The calcination of the mixture is performed in, for example, an oxygen flow with an oxygen concentration of greater than or equal to 60%, and may be performed with a flow rate of the oxygen flow of within a range of greater than or equal to 0.2 mL/min and less than or equal to 4 mL/min per 10 cm$^3$ of the calcination furnace, and greater than or equal to 0.3 L/min per kilogram of the mixture in terms of regulating the above each parameter within the above determined range. The ratio m/n of the half-value width m of the diffraction peak of the (003) plane to the half-value width n of the diffraction peak of the (110) plane in the X-ray diffraction pattern may be regulated by the mixing ratio of the compounds in the second step and the calcining temperature and calcining time in the third step. The lithium-transition metal composite oxide obtained in the third step may be washed with water.

[Negative Electrode]

The negative electrode 12 has a negative electrode current collector and negative electrode mixture layers formed on both surfaces of the negative electrode current collector. For the negative electrode current collector, a foil of a metal stable within a potential range of the negative electrode 12, such as copper and a copper alloy, a film in which such a metal is disposed on a surface layer thereof, and the like may be used. The negative electrode mixture layer includes a negative electrode active material and a binder. The negative electrode 12 may be produced by applying a negative electrode mixture slurry including the negative electrode active material, the binder, and the like on the surfaces of the negative electrode current collector, drying and subsequently rolling the coating to form the negative electrode mixture layers on both the surfaces of the negative electrode current collector.

The negative electrode active material included in the negative electrode mixture layer is not particularly limited as long as it may reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, a material on which a carbon coating is provided may also be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0 < y < 2$), or the like may be used in combination with the graphite.

For the binder included in the negative electrode mixture layer, a fluorine-containing resin such as PTFE and PVdF, PAN, a polyimide, an acrylic resin, a polyolefin, and the like may be used as in the case of the positive electrode 11, but styrene-butadiene rubber (SBR) is preferably used. The negative electrode mixture layer may include CMC or a salt thereof, polyacrylic acid (PAA) or a salt thereof, polyvinyl alcohol (PVA), and the like.

[Separator]

For the separator 13, a porous sheet having an ion permeation property and an insulation property is used, for example. Specific examples of the porous sheet include a fine porous, thin film, a woven fabric, and a nonwoven fabric. As a material for the separator 13, a polyolefin such as polyethylene and polypropylene, cellulose, and the like are suitable. The separator 13 may have a single-layered structure, or may have a stacked structure. On a surface of the separator 13, a resin layer having high heat resistance, such as an aramid resin, and a filler layer including a filler of an inorganic compound may be provided.

[Non-Aqueous Electrolyte]

The non-aqueous electrolyte includes a non-aqueous solvent and an electrolyte salt dissolved in the non-aqueous solvent, for example. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the above esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate (EP).

Examples of the above ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiMnCl_4$, LiSCN, $LiCF_3SO_3$, $LiCF_3CO_2$, $Li(P(C_2O_4)F_4)$, $LiPF_{6-x}(C_nF_{2n+1})_x$ ($1 < x < 6$, and n represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_lF_{2l+1}SO_2)(C_mF_{2m+1}SO_2)$ { 1 and m represent an integer of greater than or equal to 0}. As the lithium salt, these salts may be used singly or a plurality of kinds thereof may be mixed to use. Among them, $LiPF_6$ is preferably used from the viewpoints of ion conductivity, electrochemical stability, and the like. A concentration of the lithium salt is, for example, greater than or equal to 0.8 mol and less than or equal to 1.8 mol per litter of the non-aqueous solvent. Furthermore, vinylene carbonate and a propanesultone-based additive may be added.

EXAMPLES

Hereinafter, the present disclosure will be further described with Examples and Comparative Examples, but the present disclosure is not limited to the following Examples.

[Production of Positive Electrode Active Material]

<Example 1>

A composite hydroxide obtained by a coprecipitation method and represented by $[Ni_{0.91}Mn_{0.09}](OH)_2$ was calcined at 500°C for 8 hours to obtain a composite oxide ($Ni_{0.91}Mn_{0.09}O_2$) (the first step). Lithium hydroxide (LiOH) was mixed so that a mole ratio between a total of Ni and Mn in the composite oxide and Li was 1: 1.01 to obtain a mixture (the second step). This mixture was calcined under an oxygen flow with an oxygen concentration of 95% (a flow rate of 5 L/min per kilogram of the mixture) at a heating rate of 2 °C/min from a room temperature to 650°C, and then calcined at a heating rate of 1 °C/min from 650°C to 750°C. This calcined product was washed with water for removing an impurity to obtain a lithium-transition metal composite oxide as a positive electrode active material of Example 1 (the third step). Table 1 shows analysis results of the lithium-transition metal composite oxide by ICP-AES. An X-ray diffraction measurement was performed on the positive electrode active material of Example 1. A proportion of the metal element excluding Li and present in the Li layer relative to the total number of moles of metal elements excluding Li in the lithium-transition metal composite oxide was 5.1 mol%. A ratio m/n of a half-value width m of a diffraction peak of a (003) plane to a half-value width n of a diffraction peak of a (110) plane of the X-ray diffraction pattern by X-ray diffraction was 0.79.

[Production of Positive Electrode]

Mixing 95 parts by mass of the above positive electrode active material, 3 parts by mass of acetylene black as a conductive agent, and 2 parts by mass of polyvinylidene fluoride as a binder was performed at this ratio, and this mixture was mixed with N-methyl-2-pyrrolidone (NMP) to prepare a positive electrode slurry. Then, this positive electrode slurry was applied on a positive electrode current collector made of aluminum foil with 15 $\mu$m in thickness, the coating was dried and then rolled with a roller, and cut to a predetermined electrode size to obtain a positive electrode in which positive electrode mixture layers were formed on both surfaces of the positive electrode core. On a part of the positive electrode, an exposed portion where a surface of the positive electrode core was exposed was provided.

[Preparation of Non-Aqueous Electrolyte]

Ethylene carbonate (EC), methyl ethyl carbonate (MEC), and dimethyl carbonate (DMC) were mixed at a volume ratio of 3:3:4. Into this mixed solvent, lithium hexafluorophosphate ($LiPF_6$) was dissolved so that a concentration was 1.2 mol/L to prepare a non-aqueous electrolyte.

[Production of Test Cell]

An aluminum lead was attached to the exposed portion of the positive electrode, and a nickel lead was attached to lithium metal foil as a negative electrode, respectively. The positive electrode and the negative electrode were spirally wound with a separator made of a polyolefin interposed therebetween, and then press-formed in a radial direction to produce a flat, wound electrode assembly. This electrode assembly was housed in an exterior composed of an aluminum laminate sheet, the non-aqueous electrolyte liquid was injected thereinto, and then an opening of the exterior was sealed to obtain a test cell.

[Measurement of Porosity of Lithium-Transition Metal Composite Oxide in Positive Electrode]

Measured was a porosity of the lithium-transition metal composite oxide in the positive electrode in the test cell. A method for measuring the porosity was as follows. First, finishing of a cross section of the produced positive electrode was performed by a cross-section polisher (CP) method, and the polished surface was observed with scanning ion microscopy (SIM) under a condition of a magnification of greater than or equal to one thousand and less than or equal to ten thousands. From the obtained SIM image, the porosity of the lithium-transition metal composite oxide included in the positive electrode was calculated by using an analysis software, Image-Pro PLUS. Specifically, a color of a pore portion in the secondary particles of the lithium-transition metal composite oxide and a color of a portion other than the pore of the secondary particles of the lithium-transition metal composite oxide were divided into: white and black portions; or black and white portions, each area thereof was determined, and the porosity was determined from a ratio between these areas.

[Evaluation of Initial Efficiency]

Under a temperature environment at 25°C, the test cell was charged at a constant current of 0.2 It until a battery voltage reached 4.3 V, and then charged at a constant voltage of 4.3 V until a current value reached 1/100 It. Thereafter, the test cell was discharged at a constant current of 0.2 It until the battery voltage reached 2.5 V. From a charge capacity and discharge capacity measured with the above charge and discharge, an initial efficiency was determined by the following formula.

$$\text{Initial Efficiency (\%)} = \text{Discharge Capacity / Charge Capacity} \times 100$$

[Evaluation of Capacity Maintenance Rate]

The following cycle test was performed on the test cell. A discharge capacity at the 1st cycle and a discharge capacity at the 30th cycle of the cycle test were determined, and a capacity maintenance rate was calculated by the following formula.

$$\text{Capacity Maintenance Rate (\%)} = (\text{Discharge Capacity at 30th Cycle / Discharge Capacity at 1st Cycle}) \times 100$$

<Cycle Test>

Under a temperature environment at 25°C, the test cell was charged at a constant current of 0.2 It until a battery voltage reached 4.3 V, and charged at a constant voltage of 4.3 V until a current value reached 1/20 It. Thereafter, the test cell was discharged at a constant current of 0.2 It until the battery voltage reached 2.5 V. This charge-discharge cycle was repeated with 30 cycles.

<Example 2>

A test cell was produced, measured, and evaluated in the same manner as in Example 1 except that, in the production of the positive electrode active material, a transition metal oxide represented by the general formula $Ni_{0.92}Mn_{0.08}O_2$ and $Ca(OH)_2$ were mixed so that a Ca content was 1 mol% relative to a total of Ni and Mn in the transition metal oxide, and lithium hydroxide (LiOH) was further mixed so that a mole ratio between a total of Ni, Mn, and Ca and Li was 1:1.01.

<Example 3>

A test cell was produced, measured, and evaluated in the same manner as in Example 1 except that, in the production of the positive electrode active material, a transition metal oxide represented by the general formula $Ni_{0.915}Mn_{0.085}O_2$ and $Sr(OH)_2$ were mixed so that a Sr content was 0.5 mol% relative to a total of Ni and Mn in the transition metal oxide, and lithium hydroxide (LiOH) was further mixed so that a mole ratio between a total of Ni, Mn, and Sr and Li was 1:1.01.

<Example 4>

A test cell was produced, measured, and evaluated in the same manner as in Example 1 except that, in the production of the positive electrode active material, a transition metal oxide represented by the general formula $Ni_{0.93}Mn_{0.07}O_2$ and $Al(OH)_3$ were mixed so that an Al content was 2 mol% relative to a total of Ni and Mn in the transition metal oxide, and lithium hydroxide (LiOH) was further mixed so that a mole ratio between a total of Ni, Mn, and Al and Li was 1:1.03.

<Example 5>

A test cell was produced, measured, and evaluated in the same manner as in Example 1 except that, in the production of the positive electrode active material, a transition metal oxide represented by the general formula $Ni_{0.91}Mn_{0.09}O_2$ and $Nb_2O_5$ were mixed so that a Nb content was 1 mol% relative to a total of Ni and Mn in the transition metal oxide, and lithium hydroxide (LiOH) was further mixed so that a mole ratio between a total of Ni, Mn, and Nb and Li was 1:1.02.

<Example 6>

A test cell was produced, measured, and evaluated in the same manner as in Example 1 except that, in the production of the positive electrode active material, a transition metal oxide represented by the general formula $Ni_{0.915}Mn_{0.085}O_2$ and $WO_3$ were mixed so that a W content was 0.5 mol% relative to a total of Ni and Mn in the transition metal oxide, and lithium hydroxide (LiOH) was further mixed so that a mole ratio between a total of Ni, Mn, and W and Li was 1:1.02.

<Example 7>

A test cell was produced, measured, and evaluated in the same manner as in Example 1 except that, in the production of the positive electrode active material: a composite hydroxide obtained by a coprecipitation method and represented by $[Ni_{0.93}Mn_{0.07}](OH)_2$ was calcined at 500°C for 8 hours to obtain a composite oxide ($Ni_{0.93}Mn_{0.07}O_2$); and in the third step, the composite oxide was calcined from a room temperature to 650°C at a heating rate of 2 °C/min and then calcined from 650°C to 700°C at a heating rate of 1 °C/min.

<Example 8>

A test cell was produced, measured, and evaluated in the same manner as in Example 1 except that, in the production of the positive electrode active material: a composite hydroxide obtained by a coprecipitation method and represented by $[Ni_{0.85}Mn_{0.15}](OH)_2$ was calcined at 500°C for 8 hours to obtain a composite oxide ($Ni_{0.85}Mn_{0.15}O_2$); the transition metal oxide and $H_3BO_3$ were mixed so that a B content was 2 mol% relative to a total of Ni and Mn in the composite oxide, and lithium hydroxide (LiOH) was further mixed so that a mole ratio between Ni, Mn, and B and Li was 1:1.05 to obtain a mixture (the second step); and in the third step, the mixture was calcined from a room temperature to 650°C at a heating rate of 2 °C/min and then calcined from 650°C to 800°C at a heating rate of 1 °C/min.

<Comparative Example 1>

A test cell was produced, measured, and evaluated in the same manner as in Example 1 except that, in the third step of the production of the positive electrode active material, the mixture was calcined from a room temperature to 650°C at a heating rate of 2 °C/min and then calcined from 650°C to 780°C at a heating rate of 1 °C/min.

<Comparative Example 2>

A test cell was produced, measured, and evaluated in the same manner as in Example 1 except that, in the second step of the production of the positive electrode active material, lithium hydroxide (LiOH) was mixed so that a mole ratio between a total of Ni and Mn in the composite oxide and Li was 1: 1.05 to obtain a mixture.

<Comparative Example 3>

A test cell was produced, measured, and evaluated in the same manner as in Example 1 except that, in the third step of the production of the positive electrode active material, the mixture was calcined from a room temperature to 650°C at a heating rate of 2 °C/min and then calcined from 650°C to 730°C at a heating rate of 1 °C/min.

<Comparative Example 4>

A test cell was produced, measured, and evaluated in the same manner as in Example 1 except that, in the second step of the production of the positive electrode active material, lithium hydroxide (LiOH) was mixed so that a mole ratio between a total of Ni and Mn in the composite oxide and Li was 1:0.98 to obtain a mixture.

<Comparative Example 5>

A test cell was produced, measured, and evaluated in the same manner as in Example 1 except that, in the third step of the production of the positive electrode active material, the mixture was calcined from a room temperature to 650°C at a heating rate of 1 °C/min and then calcined from 650°C to 730°C at a heating rate of 0.3 °C/min.

<Comparative Example 6>

A test cell was produced, measured, and evaluated in the same manner as in Example 1 except that, in the third step of the production of the positive electrode active material, the mixture was calcined from a room temperature to 650°C at a heating rate of 3 °C/min and then calcined from 650°C to 750°C at a heating rate of 1 °C/min.

<Comparative Example 7>

A test cell was produced, measured, and evaluated in the same manner as in Example 7 except that, in the third step of the production of the positive electrode active material, the mixture was calcined from a room temperature to 650°C at a heating rate of 3 °C/min and then calcined from 650°C to 720°C at a heating rate of 2 °C/min.

<Comparative Example 8>

A test cell was produced, measured, and evaluated in the same manner as in Example 8 except that, in the second step of the production of the positive electrode active material, lithium hydroxide (LiOH) was mixed so that a mole ratio between a total of Ni and Mn in the composite oxide and Li was 1:1.05 to obtain a mixture.

Tables 1 to 3 show the initial efficiency and capacity maintenance rate of Examples and Comparative Examples. Each of the evaluation results of the capacity maintenance rate shown in Tables 1 to 3 is shown relatively to the initial efficiency and capacity maintenance rate of the test cells of Comparative Examples 1, 7, and 8 being 100%. Tables 1 to 3 also show: the proportion of the metal elements excluding Li and present in the Li layer relative to the total number of moles of metal elements excluding Li; the half-value width n of the diffraction peak of the (110) plane, half-value width m of the diffraction peak of the (003) plane, and the ratio of m/n in the X-ray diffraction pattern by the X-ray diffraction; and the porosity inside the lithium-transition metal composite oxide particle in the positive electrode.

[Table 1]

| | Positive electrode active material (lithium-transition metal composite oxide) | | | | | | | | Evaluation results | |
| --- | --- | --- | --- | --- | --- | --- | --- | --- | --- | --- |
| | Composition | | | Metal elements excluding Li in Li layer [mol%] | X-ray diffraction pattern | | | Porosity [%] | | |
| | Ni [mol%] | Mn [mol%] | Element excluding Li and Mn [mol%] | | m | n | m/n | | Initial efficiency [%] | Capacity maintenance rate [%] |
| Example 1 | 91 | 9 | - | 5.1 | 0.22 | 0.28 | 0.79 | 2.8 | 100.3 | 103.8 |
| Example 2 | 91 | 8 | Ca 1 | 4.3 | 0.19 | 0.25 | 0.77 | 1.8 | 100.1 | 105.6 |
| Example 3 | 91 | 8.5 | Sr 0.5 | 4.3 | 0.20 | 0.25 | 0.80 | 2.0 | 100.2 | 106.2 |
| Example 4 | 91 | 7 | Al 2 | 4.7 | 0.22 | 0.28 | 0.78 | 2.3 | 100.1 | 105.1 |
| Example 5 | 90 | 9 | Nb 1 | 4.8 | 0.19 | 0.23 | 0.81 | 1.8 | 100.2 | 104.0 |
| Example 6 | 91 | 8.5 | W 0.5 | 4.7 | 0.20 | 0.25 | 0.80 | 1.8 | 100.5 | 105.4 |
| Comparative Example 1 | 91 | 9 | - | 4.0 | 0.19 | 0.28 | 0.69 | 1.2 | 100 | 100 |
| Comparative Example 2 | 91 | 9 | - | 2.8 | 0.13 | 0.18 | 0.73 | 1.1 | 100.2 | 98.3 |
| Comparative Example 3 | 91 | 9 | - | 5.6 | 0.19 | 0.22 | 0.88 | 1.8 | 97.8 | 100.3 |
| Comparative Example 4 | 91 | 9 | - | 9.0 | 0.25 | 0.30 | 0.84 | 2.5 | 92.3 | 88.1 |
| Comparative Example 5 | 91 | 9 | - | 4.8 | 0.22 | 0.30 | 0.73 | 5.2 | 101.0 | 98.0 |
| Comparative Example 6 | 91 | 9 | - | 4.8 | 0.22 | 0.27 | 0.81 | 0.5 | 96.0 | 99.8 |

EP 4 265 570 A1

13

[Table 2]

| | Positive electrode active material (lithium-transition metal composite oxide) | | | | | | | | Evaluation results | |
|---|---|---|---|---|---|---|---|---|---|---|
| | Composition | | | Metal elements excluding Li in Li layer [mol%] | X-ray diffraction pattern | | | Porosity [%] | | |
| | Ni [mol%] | Mn [mol%] | Element excluding Li and Mn [mol%] | | m | n | m/n | | Initial efficiency [%] | Capacity maintenance rate [%] |
| Example 7 | 93 | 7 | - | 4.5 | 0.18 | 0.23 | 0.79 | 1.4 | 101.2 | 104.8 |
| Comparative Example 7 | 93 | 7 | - | 5.6 | 0.16 | 0.21 | 0.86 | 1.2 | 100 | 100 |

[Table 3]

| | Positive electrode active material (lithium-transition metal composite oxide) | | | | | | | | Evaluation results | |
| --- | --- | --- | --- | --- | --- | --- | --- | --- | --- | --- |
| | Composition | | | Metal elements excluding Li in Li layer [mol%] | X-ray diffraction pattern | | | Porosity [%] | | |
| | Ni [mol%] | Mn [mol%] | Element excluding Li and Mn [mol%] | | m | n | m/n | | Initial efficiency [%] | Capacity maintenance rate [%] |
| Example 8 | 83 | 15 | B2 | 4.7 | 0.20 | 0.24 | 0.82 | 4.1 | 100.6 | 101.4 |
| Comparative Example 8 | 83 | 17 | - | 2.9 | 0.19 | 0.26 | 0.73 | 1.4 | 100 | 100 |

As shown in Tables 1 to 3, Examples 1 to 8 have higher initial efficiency and capacity maintenance rate than Comparative Examples 1 to 8. In addition, from the comparison between Example 1 and Examples 2 to 6, the lithium-transition metal composite oxide included in the positive electrode active material containing the metal elements such as Ca, Sr, Al, Nb, and W in addition to Li, Ni, and Mn further increases the capacity maintenance rate.

REFERENCE SIGNS LIST

10 Secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

**Claims**

1. A positive electrode for a non-aqueous electrolyte secondary battery, including a positive electrode active material, wherein

   the positive electrode active material includes a lithium-transition metal composite oxide having a layered structure and containing at least Ni and Mn,
   a proportion of Ni relative to a total amount of metal elements excluding Li in the lithium-transition metal composite oxide is within a range of 80 mol% $\leq$ Ni $\leq$ 95 mol%,
   a proportion of Mn relative to the total amount of metal elements excluding Li in the lithium-transition metal composite oxide is within a range of 0 mol% < Mn $\leq$ 20 mol%,
   the layered structure includes a Li layer reversibly intercalating and deintercalating Li, and a proportion of metal elements excluding Li and present in the Li layer is greater than or equal to 3 mol% and less than or equal to 8 mol% relative to a total number of moles of metal elements excluding Li in the lithium-transition metal composite oxide,
   a ratio m/n of a half-value width m of a diffraction peak of a (003) plane to a half-value width n of a diffraction peak of a (110) plane in an X-ray diffraction pattern by X-ray diffraction is 0.72 $\leq$ m/n $\leq$ 0.85, and
   the lithium-transition metal composite oxide in the positive electrode for a non-aqueous electrolyte secondary battery is composed of secondary particles each formed by aggregation of primary particles, and a porosity inside the secondary particle is greater than or equal to 1% and less than or equal to 5%.

2. The positive electrode for a non-aqueous electrolyte secondary battery according to claim 1, wherein

   the lithium-transition metal composite oxide further contains M, wherein M represents at least one element selected from the group consisting of B, Al, Co, Ca, Fe, Ti, Si, Sr, Nb, Mo, W, Zr, and Zn, and
   a proportion of M relative to the total amount of metal elements excluding Li in the lithium-transition metal composite oxide is within a range of 0 mol% $\leq$ M $\leq$ 7 mol%.

3. The positive electrode for a non-aqueous electrolyte secondary battery according to claim 1 or 2, wherein a proportion of Co relative to the total amount of metal elements excluding Li in the lithium-transition metal composite oxide is within a range of 0 mol% $\leq$ Co $\leq$ 5 mol%.

4. The positive electrode for a non-aqueous electrolyte secondary battery according to any one of claims 1 to 3, wherein

   the lithium-transition metal composite oxide has a surface-modified layer on surfaces of the secondary particles or on an interface on which the primary particles contact with each other, and
   the surface-modified layer contains at least one element selected from the group consisting of Ca, Sr, W, B, Nb, Mo, Al, and Zr.

5. The positive electrode for a non-aqueous electrolyte secondary battery according to claim 4, wherein the surface-modified layer contains at least any one element of the group consisting of Ca, Sr, B, and W.

6. The positive electrode for a non-aqueous electrolyte secondary battery according to any one of claims 1 to 5, wherein the lithium-transition metal composite oxide is represented by the general formula $Li_xNi_yMn_zM_\alpha O_{2-\beta}$, wherein 0.95 $\leq$ x $\leq$ 1.05, 0.80 $\leq$ y $\leq$ 0.95, 0 < z $\leq$ 0.2, 0 $\leq$ $\alpha$ $\leq$ 0.07, 0 $\leq$ $\beta$ $\leq$ 0.05, and y+z+$\alpha$ = 1, and M represent at least one element selected from the group consisting of B, Al, Ca, Co, Fe, Ti, Si, Sr, Nb, Mo, W, Zr, and Zn.

7. A non-aqueous electrolyte secondary battery, comprising:

the positive electrode for a non-aqueous electrolyte secondary battery according to any one of claims 1 to 6;
a negative electrode; and
a non-aqueous electrolyte.

Figure 1

## INTERNATIONAL SEARCH REPORT

| | International application No. |
|---|---|
| | **PCT/JP2021/044094** |

| A. | CLASSIFICATION OF SUBJECT MATTER |
|---|---|

*C01G 53/00*(2006.01)i; *H01M 4/36*(2006.01)i; *H01M 4/505*(2010.01)i; *H01M 4/525*(2010.01)i
FI:   H01M4/525; H01M4/505; H01M4/36 C; C01G53/00 A

According to International Patent Classification (IPC) or to both national classification and IPC

| B. | FIELDS SEARCHED |
|---|---|

Minimum documentation searched (classification system followed by classification symbols)

   C01G53/00; H01M4/36; H01M4/505; H01M4/525

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2019-021626 A (GUIZHOU ZHENHUA E CHEM INC) 07 February 2019 (2019-02-07) | 1-7 |
| A | JP 2018-014326 A (SAMSUNG SDI CO., LTD.) 25 January 2018 (2018-01-25) | 1-7 |
| A | JP 2017-525089 A (UMICORE) 31 August 2017 (2017-08-31) | 1-7 |
| A | WO 2012/124240 A1 (SANYO ELECTRIC CO., LTD.) 20 September 2012 (2012-09-20) | 1-7 |
| A | JP 2005-053764 A (NIKKO MATERIALS CO LTD) 03 March 2005 (2005-03-03) | 1-7 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **26 January 2022** | **15 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 265 570 A1

**INTERNATIONAL SEARCH REPORT**
Information on patent family members

International application No.

**PCT/JP2021/044094**

| Patent document cited in search report | | | Publication date (day/month/year) | Patent family member(s) | | | Publication date (day/month/year) |
|---|---|---|---|---|---|---|---|
| JP | 2019-021626 | A | 07 February 2019 | US | 2019/0020020 | A1 | |
| | | | | EP | 3444226 | A1 | |
| | | | | CN | 107359334 | A | |
| | | | | KR | 10-2019-0006907 | A | |
| JP | 2018-014326 | A | 25 January 2018 | US | 2018/0026268 | A1 | |
| | | | | EP | 3272710 | A1 | |
| | | | | KR | 10-2018-0010122 | A | |
| | | | | CN | 107644981 | A | |
| JP | 2017-525089 | A | 31 August 2017 | US | 2017/0125808 | A1 | |
| | | | | WO | 2015/189740 | A1 | |
| | | | | EP | 3155680 | A1 | |
| | | | | TW | 201607120 | A | |
| | | | | CN | 106463724 | A | |
| | | | | KR | 10-2017-0018405 | A | |
| WO | 2012/124240 | A1 | 20 September 2012 | US | 2013/0323606 | A1 | |
| | | | | EP | 2685532 | A1 | |
| | | | | CN | 103415947 | A | |
| JP | 2005-053764 | A | 03 March 2005 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013084536 A

- WO 2020027158 A